Europäisches Patentamt

European Patent Office

Office européen des brevets

(11) Veröffentlichungsnummer: **0 019 685
B1**

(12) **EUROPÄISCHE PATENTSCHRIFT**

<table>
<tr><td>(45) Veröffentlichungstag der Patentschrift:<br>08.08.84</td><td>(51) Int. Cl.³: <b>G 01 N 11/14</b></td></tr>
</table>

(21) Anmeldenummer: **80100891.3**

(22) Anmeldetag: **22.02.80**

(54) **Sollwertgeber eines analogen Regelungssystems.**

<table>
<tr><td>(30) Priorität: <b>23.05.79 CH 4834/79</b></td><td>(73) Patentinhaber: <b>CONTRAVES AG,<br>Schaffhauserstrasse 580, CH-8052 Zürich (CH)</b></td></tr>
<tr><td>(43) Veröffentlichungstag der Anmeldung:<br><b>10.12.80 Patentblatt 80/25</b></td><td>(72) Erfinder: <b>Kessler, Guido, El. Ing. HTL, Bächlerstrasse 13,<br>CH-8046 Zürich (CH)</b></td></tr>
<tr><td>(45) Bekanntmachung des Hinweises auf die Patenterteilung:<br><b>08.08.84 Patentblatt 84/32</b></td><td rowspan="2">(74) Vertreter: <b>Köver, François, Dr. et al, Patentanwälte<br>H.Mitscherlich K. Gunschmann, Dr. W. Körber,<br>J.Schmidt-Evers Steinsdorfstrasse 10,<br>D-8000 München 22 (DE)</b></td></tr>
<tr><td>�External Benannte Vertragsstaaten:<br><b>CH DE FR GB</b></td></tr>
<tr><td>(56) Entgegenhaltungen:<br><b>FR - A - 1 378 137<br>US - A - 3 875 791<br>US - A - 4 062 225<br>US - A - 4 117 382</b></td><td></td></tr>
</table>

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Die Erfindung betrifft einen Sollwertgeber eines analogen Regelungssystems für die Drehzahl einer rheologischen Meßanordnung, insbesondere eines Rotationsviskosimeters, mit einem Referenzfunktionsgenerator mit mindestens einer Ausgangsleitung sowie einer Zuführung für einen elektrischen Pegel und mindestens einer weiteren Zuführung für Steuersignale zusammengeschaltet mit Mitteln zur Erzeugung des elektrischen Pegels und Mitteln zur Erzeugung der Steuersignale.

Die zentrale Aufgabe in der Viskosimetrie ist das Messen des Fließverhaltens fließfähiger Stoffe und das Festhalten der durch die Messung erzielten Information in Form von charakterisierenden Fließkurven. Die durch die Messung gewonnene Tabelle von Stützstellen und Stützwerten, üblicherweise Schubspannung $\tau$ in Abhängigkeit eines geeigneten mittleren Geschwindigkeitsgefälles D, wird, mitunter auch automatisch, zu einer Fließkurve, also einer das Fließverhalten charakterisierenden Darstellung D = f($\tau$) verarbeitet. Zwischen den Stützpunkten wird nach Auftragen der Meßresultate wie üblich interpoliert. Diese Interpolation stellt eine mehr oder minder zulässige Mitteilung der Funktion zwischen zwei Stützpunkten dar; liegen diese beispielsweise weit auseinander und werden sie beispielsweise einfach durch eine Gerade verbunden, so kann durch solche Maßnahmen der Verlauf der konstruierten Fließkurve sehr verfälscht dargestellt werden.

Um eine aussagekräftige Charakterisierung des Fließverhaltens zu erhalten, ist die Wahl der Stützstellen und damit die der Meßpunkte entscheidend. So werden Meßpunkte an gewissen Stellen dichter gelegt, dort wo beispielsweise die Funktion steil verläuft oder wo interessierende Unstetigkeiten auszumessen sind, dagegen in anderen Regionen derselben Funktion in größeren Abständen angeordnet. Vielfach trägt man Fließkurven doppelt-logarithmisch auf, damit man einen genügend großen Meßbereich unterbringen kann. In der Darstellung log(D) über log($\tau$) erscheinen die Newtonschen Bereiche als Geraden mit 45°-Neigung, der strukturviskose Teil zeigt einen sigmatoiden Verlauf mit einem Wendepunkt. Aus dieser Darstellungsform leitet man weitere charakteristische Werte ab, wie Steigung und differentielle Viskosität.

Häufige Praxis ist, die Stützstellen und damit auch die Meßpunkte in Abständen einer geometrischen Folge zu wählen, diese läßt sich beispielsweise gemäß der nachfolgend offenbarten Erfindung durch äquidistante Abtastung einer exponentiell abfallenden Funktion gewinnen, so wie auch eine lineare Verteilung der Meßpunkte an einer linear verlaufenden Funktion abgetastet werden kann.

Die funktionsabhängige Drehzahlabstufung wird üblicherweise mit mechanischen Stufengetrieben oder elektrisch mit Widerstandsdekaden realisiert. Meistens befindet sich an einem Gerät der Meßanlage ein Drehknopf oder eine Tastenreihe mit einer Anzahl schaltbarer Stufen, die man während einer Messung einzeln durchschaltet, worauf man bei jeder Stufe den Meßwert von einer Anzeige abliest. Auf diese Weise entsteht eine Tabelle von Wertepaaren, die zu einer Fließkurve weiterverarbeitet wird. Ein solches Getriebe oder eine solche Dekade entspricht normalerweise nur einer einzigen Drehzahlkennlinie. Um aber eine weite Viskositätsspanne vermessen zu können, auch um in ganz bestimmten Drehzahlbereichen messen zu können, müßte ein größeres Angebot von verschiedenen, den Meßproblemen angepaßten charakteristischen Drehzahlkennlinien verfügbar sein und um dies zu realisieren, müßte das Angebot von Stufengetrieben oder Widerstandsdekaden, die zu der gewünschten Drehzahlkennlinienschar zusammenwirken, ebenfalls recht groß sein. Dies bedeutet jedoch einen nicht unerheblichen apparativen und damit materiellen Aufwand.

Aus dem Patentdokument US-A-3 875 791 (FITZGERALD) ist ein Sollwertgeber bekannt, in welchem der Sollwert vom Gleitkontakt 30 eines Potentiometers 26 geliefert wird, wobei dieser Gleitkontakt 30 mechanisch von einem Motor 27 bewegt wird. Die Drehzahl des Motors 27 kann manuell oder automatisch gesteuert werden. Beim manuellen Betrieb hat die Bedienungsperson den Motor 27 derart zu steuern, daß der gewünschte Sollwert genau erreicht wird, sofern kein Durchlaufen von Sollwerten beabsichtigt wird. Beim automatischen Betrieb wird ein vorbestimmter Bereich von Sollwerten automatisch durchlaufen, und zwar mit einer vorbestimmten Änderungsrate, die durch die Programmeinrichtung 29 mittelbar über die Drehzahl des Motors 27 gesteuert wird. Bei diesem Sollwertgeber ist es im automatischen Betrieb nicht möglich, eine Folge von jeweils konstanten Sollwerten zu erhalten.

Aus dem Patentdokument US-A-4 062 225 (MURPHY) ist ein Sollwertgeber mit einem Drehzahlregler eines Rotationsviskosimeters bekannt. Hier ist der Sollwert eine Frequenz. Ein Schalter 31 ermöglicht die Wahl dieser Frequenz aus einer vorbestimmten Anzahl von vorbestimmten Frequenzen, die im Gerät vom Oszillator 28 und von Frequenzteilern 40-46 erzeugt werden. Eine vorbestimmte Kennlinie ist dadurch erreichbar, daß die Frequenzteiler aneinandergereiht und deren Teilungsfaktoren der Kennlinie entsprechend gewählt werden. Zum Erreichen dieses Resultats ist der Aufwand beträchtlich (Oszillator, viele Frequenzteiler, digitale Drehzahlregelung usw.).

Aus dem Patentdokument US-A-4 117 382 (YONEMOTO) ist die Erzeugung einer stufenförmigen oder geglätteten Referenzfunktion bekannt, die vom Anfangswert ohne Unterbrechung bis zu einem Endwert auf- oder abnimmt, ohne auf einer Zwischenstufe einen beliebig lang konstantgehaltenen Zwischenwert zu liefern. Damit ist weder eine reptitive Erzeugung und Abtastung zu einem wählbaren repetitiven Zeitpunkt noch das Halten des Abtastwertes erreichbar.

Aus dem Patentdokument FR-A-1 378 137 (S. E. V. E. C.) ist die Erzeugung einer stufenförmigen oder geglätteten Referenzfunktion bekannt, die zwischen zwei Extremwerten jeden Zwischenwert liefern und beliebig lang halten kann. Dazu wird eine äußerst aufwendige Vorrichtung mit einem elektromechanischen Stufenschalter und einer Vielzahl von Potentiometern und Kondensatoren verwendet.

Es ist daher die Aufgabe der Erfindung, mit wesentlich geringerem apparativem Aufwand und damit auch kostengünstig eine große Auswahl von funktionsabhängigen oder charakteristischen Drehzahlkennlinien zu erzeugen, die zusammen einen weiten Drehzahlbereich abdecken und zudem die Erzeugung der Drehzahlkennlinien derart zu steuern, daß beinahe jede Drehzahl im abgedeckten Kennlinienfeld realisiert werden kann.

Die Aufgabe wird durch die im Patentanspruch 1 aufgeführten Merkmale gelöst.

Die Beschreibung der Erfindung erfolgt nun, unter Zuhilfenahme von Zeichnungen, an einem Beispiel, wie Sollwerte für Drehzahlkennlinien erzeugt werden, deren Drehzahlen auf der Kennlinie nach einer geometrischen Folge abgestuft sind.

Fig. 1a) zeigt ein Funktionsblockschaltbild des Sollwertgebers und

Fig. 1b) eine mögliche Ausführungsform des Sollwertgebers;

Fig. 1c) zeigt eine für das Beispiel gewählte, exponentiell abfallende Referenzspannung.

Fig. 2a), b) zeigen Drehzahlkennlinienscharen, hergestellt mit Hilfe von Sollwerten der in Fig. 1b) angegebenen Ausführungsform des Sollwertgebers,

Fig. 3 zeigt ein Beispiel für die Berechnung der Drehzahltabellen aus denen die Kennlinien gewonnen werden und

Fig. 4a), b) zeigen ein Beispiel für die Steuerung der Schalter im Sollwertgeber der Ausführungsform nach Fig. 1b).

Der Motor des Viskosimeters, sowie der für den Antrieb nötige Regelkreis werden als erfindungsunwesentlich nicht dargestellt.

In Fig. 1a) ist der Sollwertgeber in einer Zusammenschaltung von an und für sich bekannten Funktionsblöcken dargestellt. An einer variablen elektrischen Quelle 10, dies kann eine Strom- oder Spannungsquelle sein, wird der benötigte Pegel für einen Referenzfunktionsgenerator 20 eingestellt. Dieser Referenzfunktionsgenerator erzeugt repetitiv den gewünschten Funktionsverlauf, in unserem Beispiel exponentielle Spannungsabfälle von gewünschter Anfangsamplitude und gewünschter Zeitkonstante, wobei die Repetitionsfrequenz verhältnismäßig kurz sein kann, beispielsweise 10—30 ms. Eine Abtastschaltung 30 verbindet in festen Taktfolgen kurzzeitig einen Haltekreis 40 mit dem Referenzspannungsgenerator 20. Der Ausgang des Haltekreises liefert eine Gleichspannung von der Höhe der gewünschten Referenzspannung. Äquivalent dazu kann die Pegeleinstellung statt zu Beginn in der Quelle 10, auch am Ende, also im Haltekreis 40 vorgenommen werden, so daß die Gleichspannung von der Höhe der gewünschten Referenzspannung und von einem faktisch verlegten Spannungsteiler geliefert wird. Die Initialspannung oder der Initialstrom der abgetasteten Funktion wird durch die variable elektrische Quelle 10, die Zeitkonstante der Funktion wird im Referenzfunktionsgenerator 20 und die Abtaststelle an der Referenzfunktion wird mit dem Schalter 30, jeweils unabhängig voneinander frei gewählt. Eine Steuerung 50 synchronisiert und steuert die Schaltvorgänge.

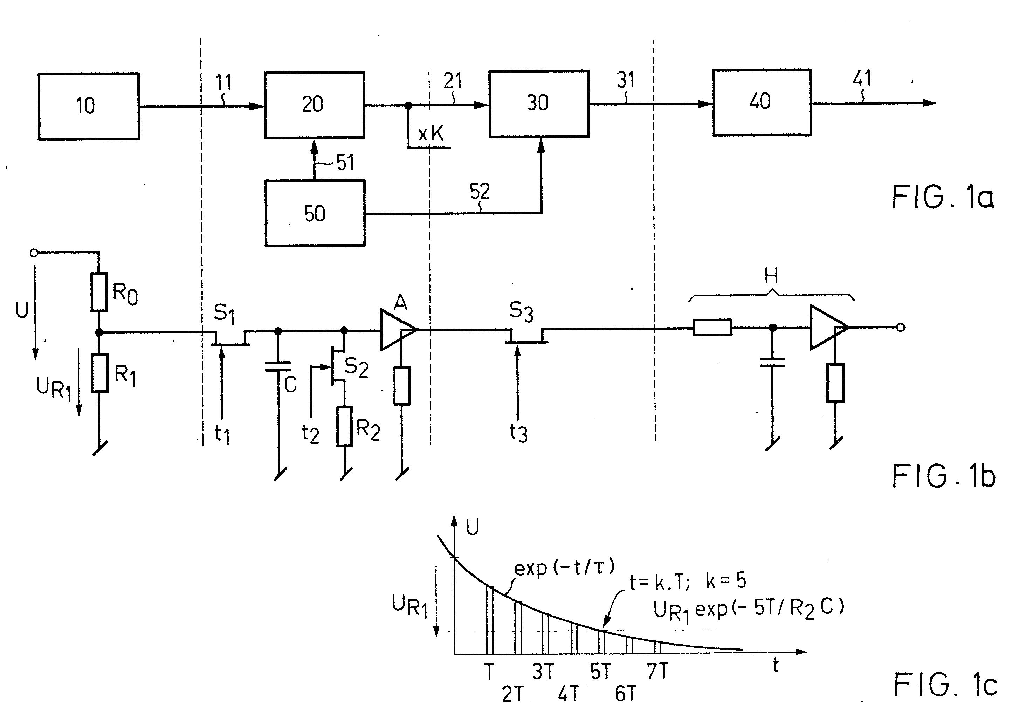

Fig. 1b) zeigt das Beispiel einer Ausführungsform des Sollwertgebers. In der elektrischen Quelle, in diesem Fall als Spannungsquelle ausgebildet, wird die Initialspannung $U_{R_1}$ mittels Spannungsteilung der Spannung U an einem Widerstandspaar $R_0/R_1$ erzeugt. Ein Schalter $S_1$, vorzugsweise ein steuerbarer Widerstand (FET), verbindet die Quelle mit einem Kondensator C, der sich dabei auf die Teilspannung $U_1$ auflädt; währenddessen bleibt ein Schalter $S_2$, ebenfalls ein FET, offen. Nach dem Erreichen des Potentials $U_1$ wird $S_1$ geöffnet und $S_2$ geschlossen. Die Entladung des Kondensators C über einen Widerstand $R_2$ wird damit eingeleitet. Ein in der Schaltung folgender 1 : 1-Verstärker A soll den beschriebenen geschalteten Tiefpaß belastungsunabhängig machen. Durch das alternierende Betätigen der Schalter $S_1$ und $S_2$ wird der Kondensator C repetitiv aufgeladen und entladen.

Prinzipiell könnten sowohl die Lade- wie auch die Entlade-Funktion verwendet werden. Im vorliegenden Beispiel wurde, um eine oft benützte Folge von Drehzahlen, nämlich die geometrische, zu erhalten, willkürlich die Entladekurve bevorzugt und diese mit Hilfe eines Schalters $S_3$, ebenfalls ein Feldeffekttransistor, mit kurzen Schließzeiten zeitlich äquidistant abgetastet. Ein nachgeschalteter Haltekreis H konserviert während nützlicher Frist den abgetasteten Spannungspegel, so daß am Ausgang des Haltekreises die Referenzspannung mit dem Spannungswert der an vorgewählter Stelle abgetasteten Referenzfunktion zur Verfügung steht.

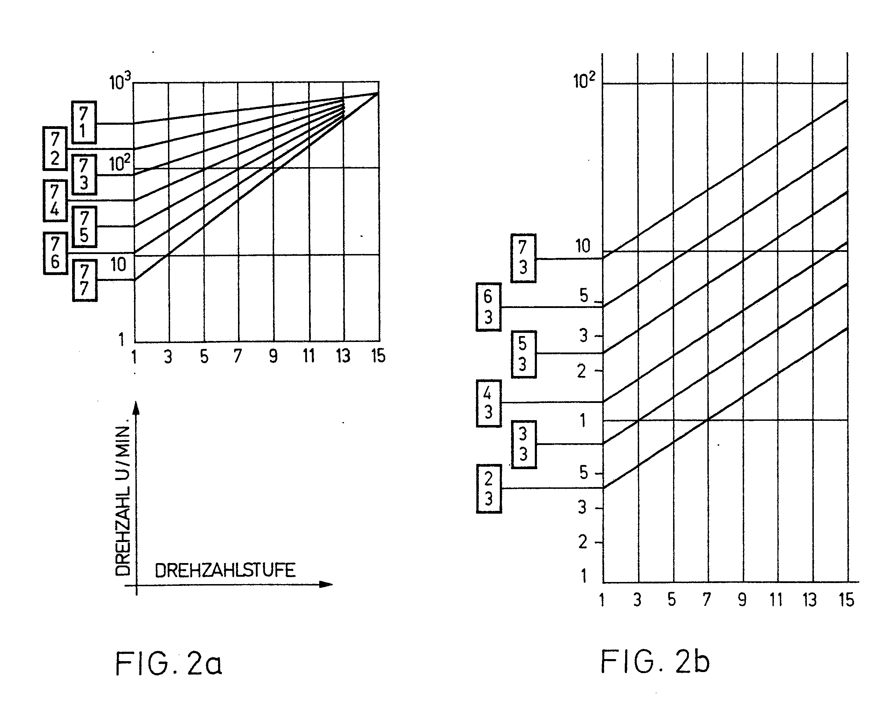

In Fig. 1c) erkennt man die Darstellung einer exponentiell abfallenden Funktion mit äquidistant eingezeichneten Impulsen, wie sie am Ausgang des Abtastschalters 30 zu erwarten wären. Jeder dieser ungefähr 100 μs dauernden Pulse schließt an eine Taktzeit T von etwa 1—2 ms an, wobei die Pulse sinnvollerweise nicht simultan erzeugt werden. Dies wäre allerdings möglich, wenn nach dem Funktionsgenerator 20 an der Verzweigungsstelle xK in Fig. 1a) die Funktion gleichzeitig mit k Schaltern $S_3$ abgegriffen und die Spannungswerte über k Haltekreise bereitgestellt würden: mit diesem Vorgehen könnte eine Drehzahlkennlinie, wie in Fig. 2a) oder b) dargestellt, direkt erzeugt werden. Während einer Viskositätsmessung jedoch werden die Drehzahlen einer Kennlinie nicht simultan, sondern einzeln und nacheinander verwendet, so daß eine Verzweigung zur simultanen Bereitstellung der Drehzahlen für viskosimetrische Messungen die Apparatur unnötig verteuern würde. In der vorliegenden Funktion von Fig. 1c) ist beispielsweise die Spannung zum Zeitpunkt $5T = 5$ Taktzeiten nach der Initialisierung der Funktion als Referenzspannung zur Drehzahlerzeugung und -Regelung hervorgehoben. Auf Fig. 1b) bezogen erhält man eine Referenzspannung $U_{R_1}\exp(-5T/R_2C)$ die man sinnvollerweise einer Drehzahlstufe $k = 5$ zuordnen könnte; sie wird repetitiv alle 10—30 ms neu erzeugt. Damit werden an die Stabilität des Haltekreises H keine hohen Anforderungen gestellt. Der Haltekreis H kann entsprechend kostengünstig ausgelegt werden. Die nun frei ausgewählte Drehzahlstufe $k = 5$ liefert unter folgenden Bedingungen verschiedene Drehzahlen: wenn $R_1$ verändert wird, wenn $R_2$ verändert wird oder wenn $R_1$ und $R_2$ zusammen verändert werden. Betrachtet man die ganze Drehzahlkennlinie mit den Stufen 1 ... k, so bewirkt eine Änderung von $R_1$ eine parallele Verschiebung der Kennlinie und eine Veränderung von $R_2$ eine Änderung der Steilheit der Kennlinie.

Daraus folgt: mit der Änderung von nur einem Widerstand kann eine andere Kennlinie erzeugt werden, und dies ist eine wesentliche Herabsetzung des in der Rheometrie üblichen Aufwandes zur Erzeugung von Kennlinien. Zudem: durch das Bereitstellen eines Satzes von austauschbaren Widerstandspaaren lassen sich leicht auswechselbare und äußerst kostengünstige Kennlinien-Moduln schaffen. Und im weiteren: durch einen auf die rheologischen Anforderungen abgestimmten Satz von Moduln lassen sich in einem beliebig weiten Drehzahlbereich praktisch alle gewünschten Drehzahlen mit nicht größerem Aufwand, als wie es zum Beispiel die Betätigung eines Schalters erfordern würde, einstellen.

Damit stellt die beschriebene Vorrichtung eine beträchtliche Abweichung gegenüber den Methoden und den Geräten der in der Viskosimetrie üblichen Instrumente zur Drehzahlerzeugung dar.

In Fig. 2a), b) sind zwei Typen von Drehzahlkennlinienscharen abgebildet. Die Drehzahlen sind in 15 Stufen eingeteilt, es kann aber auch eine niedrigere oder höhere Stufenzahl gewählt werden. Fig. 2a) zeigt eine Kennlinienschar, deren sieben Kennlinien durch sieben verschiedene Zeitkonstantenwiderstände $R_{2,y}$ mit $Y = 1 \ldots 7$ gebildet werden; der Widerstand $R_{1,x}$ im Spannungsteiler bleibt mit $x = 7$ unverändert. Neben der Ordinate sind symbolisch die den Drehzahlkennlinien zugehörigen Moduln angegeben, wobei die obere Ziffer x bzw. $R_{1,x}$ und die untere Ziffer y bzw. $R_{2,y}$ kennzeichnet. Die Zahlen für x und y stammen aus den nachfolgend noch zu erklärenden Berechnungstabellen; in diesen werden die errechneten Widerstände in einer Tabelle geordnet von 1 aufwärts durchnumeriert, diese Zahlen x und y haben also nur bezeichnenden oder etikettierenden Charakter. Fig. 2b) zeigt eine Kennlinienschar, deren sechs Kennlinien durch sechs verschiedene Spannungsteilerwiderstände $R_{1,2}$ bis $R_{1,7}$ gebildet sind, wobei der Zeitkonstantenwiderstand $R_{2,3}$ unverändert bleibt. Wiederum sind seitlich der Ordinate die zugehörigen Moduln angegeben.

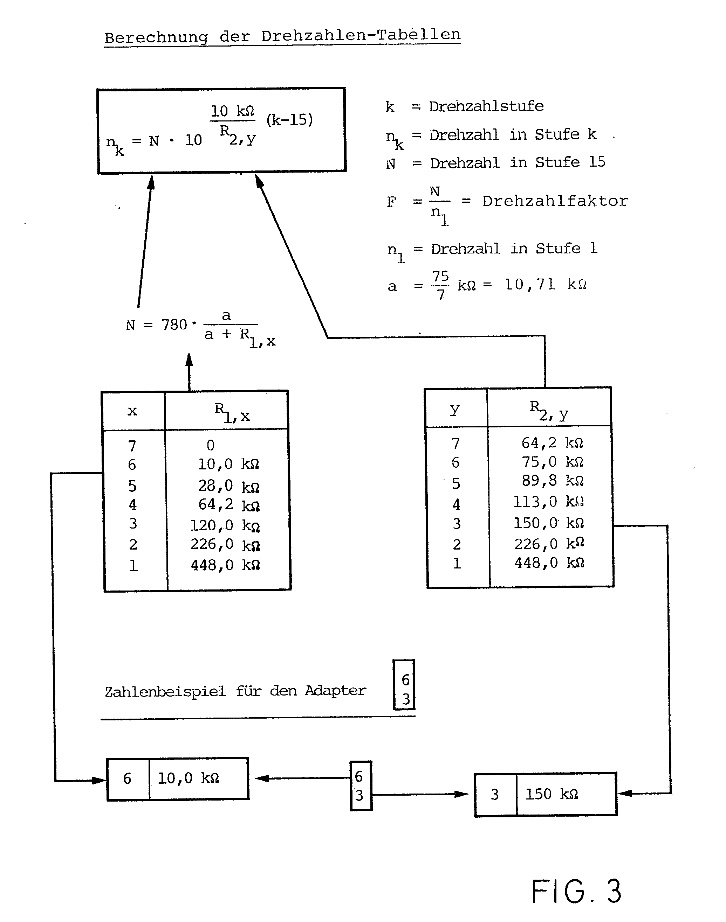

Die Berechnung der Drehzahltabellen aus den Widerstandswerten für $R_1$ und $R_2$ ist in Fig. 3 gezeigt. Die Drehzahl $n_k$ einer von beispielsweise 15 Stufen k errechnet sich aus der Beziehung

$$n_k = N \cdot 10^{\frac{10\,K\Omega}{R_{2,y}}(k-k_{max})}$$

mit

$$N = n_{max}\frac{a}{a + R_{1,x}}$$

wobei $n_{max}$ die Drehzahl bei $k_{max}$ bedeutet und in diesem Beispiel $k_{max} = 15$ ist. Die angegebene Drehzahl $n_{max} = 780$ grenzt den Drehzahlbereich nach oben ab und wurde beispielsweise als physikalische Randbedingung gesetzt, die anderen Größen beispielsweise a, haben normierenden Charakter; in diesem Beispiel ist $a = 10, 71\ k\Omega$ die Anpassung des Haltekreises an die nachfolgende Regelschaltung. Die Größen müssen entsprechend den jeweiligen Anforderungen variiert werden. Die Widerstandswerte der beiden Widerstandstabellen wurden anhand rheologischer Kriterien ausgewählt und es ist nicht erforderlich, diese Werte einzuhalten, wenn es die rheologischen Umstände anders erfordern. Die verwendeten Widerstände stammen aus der E192-Reihe und sind konfektioniert im Handel erhältlich. Dies ist zudem ein Vorteil, da für die Herstellung der üblichen Widerstandsdekaden meist spezielle Widerstandswerte und damit speziell angefertigte erheblich teurere Widerstände benötigt werden.

Die nachfolgende Tabelle ist äquivalent einer Drehzahlkennlinie, sie zeigt die Drehzahlen der Stufen $k = 1$ bis 15 bei Verwendung eines Moduls $R_{1,6} = 10\ k\Omega$; $R_{2,3} = 150\ k\Omega$ und der im vorangehenden sowie in Fig. 3 angegebenen Werte von $n_{max}$, a, $k_{max}$:

| k | $n_k$ |
|---|-------|
| 15 | 403,4 |
| 14 | 346,0 |
| 13 | 296,8 |
| 12 | 254,6 |
| 11 | 218,3 |
| 10 | 187,3 |
| 9 | 160,6 |
| 8 | 137,8 |
| 7 | 118,2 |
| 6 | 101,3 |
| 5 | 86,9 |
| 4 | 74,6 |
| 3 | 63,9 |
| 2 | 54,8 |
| 1 | 47,0 |

$$F = \frac{N}{n_1} = 10^{\frac{140\,k\Omega}{150\,k\Omega}}$$
$$= 8,5769\ldots$$

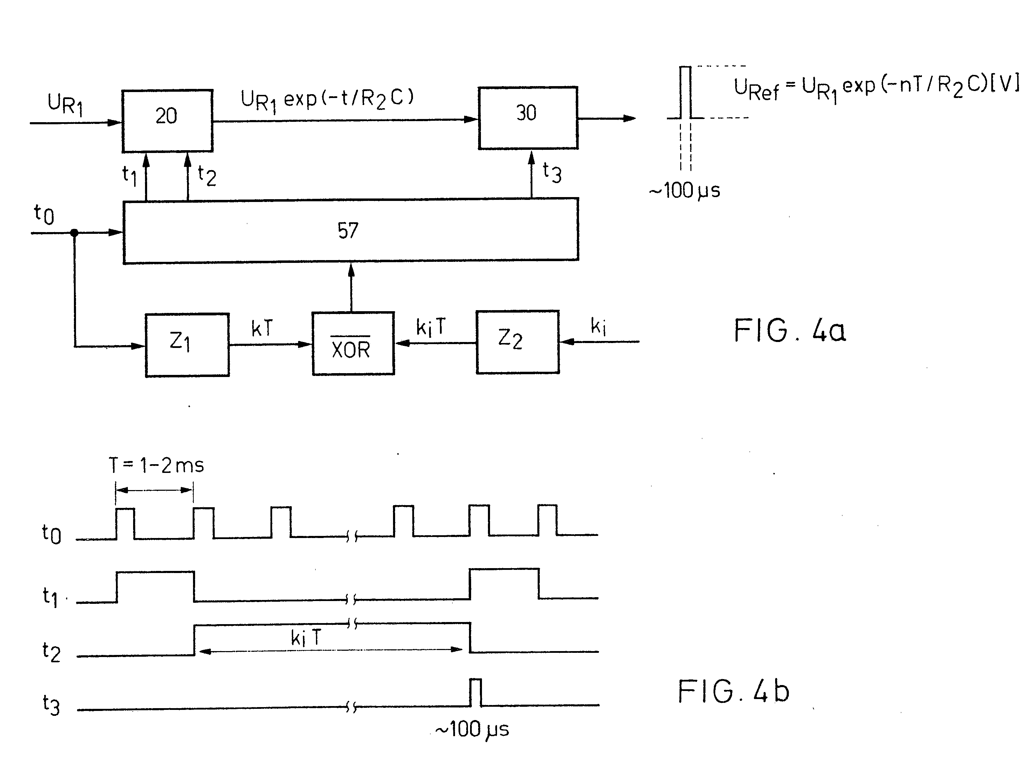

Fig. 4a), b) zeigen ein Beispiel für die Steuerung 50 der FET-Schalter $S_1$, $S_2$, $S_3$ im Sollwertgeber nach Fig. 1b). In Fig. 4b) sind die zeitlichen Zusammenhänge der Pulsfolgen angegeben: auf $t_0$ sind die Taktimpulse T, auf $t_1$ die Ladeimpulse und auf $t_2$ die $k \cdot T$ dauernden Entladephasen, sowie auf $t_3$ die Probeentnahme eingezeichnet. Auf das Blockdiagramm in Fig. 4a) bezogen, werden die gewünschten Samplingpulse folgendermaßen erzeugt:

Ein Zähler $Z_1$ zählt, von $t_0$ getaktet, periodisch die ($k_{max}$ + 1) Stufen von k = 0 bis $k_{max}$ durch, im Beispiel von 0 bis 15: die Zeit der Stufe 0 wird zum Laden des Kondensators C benützt, die Stufen 1 bis 15 dienen zum Abtasten der Referenzfunktion. Ein zweiter Zähler $Z_2$ kann fest auf $k_i$, eine der $k_{max}$ Stufen, eingestellt werden. Während der erste Zähler $Z_1$ zeitabhängig auf irgendeinem k steht, verharrt der zweite Zähler $Z_2$ auf $k_i$. Bei Äquivalenz, also $k_i$ = k, gibt das Äquivalenzgatter XOR einen Puls ab und dieser entspricht zeitmäßig auf der Zeitachse der abzutastenden Funktion einem der $k \cdot T$, beispielsweise 5T. In einem Logiknetzwerk 57 werden die Zeitfunktionen $t_1$, $t_2$ aufbereitet und mit $t_3$ synchronisiert.

Die am Ausgang des Haltekreises 40 erscheinende Referenzspannung kann je nach Dimensionierung derselben einen Ripple mit der Periodizität $k_i \cdot T$ aufweisen. Dieser läßt sich durch entsprechende Auslegung bzw. Dimensionierung des Haltekreises derart minimieren, daß er sich überhaupt nicht störend auswirkt. Im weiteren ist die aus $k_i \cdot T$ großen Teilstücken zusammengesetzte Gleichspannung von einem möglichen Jitter der repetierten Referenzfunktion abhängig. Die mit Hilfe des beschriebenen Sollwertgebers durchgeführten Viskositätsmessungen ergaben, daß solche wie oben angegebenen möglichen Abweichungen oder Störungen der Referenzspannung die Messungen nicht spürbar beeinflußten.

**Patentansprüche**

1. Sollwertgeber eines analogen Regelungssystems für die Drehzahl eines Rotationsviskosimeters, mit einem Referenzfunktionsgenerator (20) mit einer Ausgangsleitung sowie einer Zuführung (11) für einen elektrischen Pegel, mit dem ein Anfangswert einer erzeugten Referenzfunktion vorgebbar ist und einer weiteren Zuführung (51) für Steuersignale, mit Mitteln (10) zur Erzeugung des elektrischen Pegels, und mit Mitteln (50) zur Erzeugung der Steuersignale, gekennzeichnet durch die Kombination folgender Merkmale:

— eine Torschaltung (30) mit einer Zuführung (21) für das elektrische Signal vom Referenzfunktionsgenerator (20) über dessen Ausgangsleitung und mindestens einer weiteren Zuführung (52) für Steuersignale aus den Mitteln (50) zur Erzeugung dieser Steuersignale, einem an den Ausgang der Torschaltung angeschlossenen Haltekreis (40) mit mindestens einer Ausgangsleitung (41) für einen erzeugten Sollwert;
— der Referenzfunktionsgenerator (20) erzeugt wiederholt eine Referenzfunktion in einem von den Steuersignalen bestimmten Takt;
— der elektrische Pegel sowie die Änderungsrate der Referenzfunktion sind durch je einen von zwei elektrischen Widerständen ($R_1$, $R_2$) bestimmt;
— diese beiden Widerstände ($R_1$, $R_2$) sind in einem am Gerät leicht auswechselbaren Modul angeordnet.

2. Sollwertgeber nach Anspruch 1, dadurch gekennzeichnet, daß der Referenzfunktionsgenerator (20) eine Exponentialfunktion erzeugt, deren Zeitkonstante von einem der besagten Widerstände ($R_2$) abhängig ist.

3. Sollwertgeber nach Anspruch 2, dadurch gekennzeichnet, daß die Mittel zur Erzeugung eines elektrischen Pegels eine elektrische Quelle (10) umfassen, die als variierbare Spannungsquelle ausgelegt ist.

4. Sollwertgeber nach Anspruch 2, dadurch gekennzeichnet, daß der Haltekreis (40) am Ausgang einen variierbaren Spannungsteiler aufweist.

5. Sollwertgeber nach Anspruch 4, dadurch gekennzeichnet, daß die Mittel zur Erzeugung eines elektrischen Pegels eine elektrische Quelle (10) umfassen, die als Konstantstromquelle ausgelegt ist.

6. Sollwertgeber nach Anspruch 4, dadurch gekennzeichnet, daß die Mittel zur Erzeugung eines elektrischen Pegels eine elektrische Quelle (10) umfassen, die als Konstantspannungsquelle ausgelegt ist.

## Claims

1. Desired value transmitter of an analog control system for the speed of a rotation viscometer, having a reference function generator (20) with an output line and a supply line (11) for an electrical level, with which an initial value of a generated reference function can be predetermined, and a further supply line (51) for control signals, having means (10) for producing the electrical level, and having means (50) for producing the control signals, characterized by the combination of the following features:

— a gate circuit (30) with a supply line (21) for the electrical signal from the reference function generator (20) via its output line, and at least one further supply line (52) for control signals from the means (50) for producing these control signals, a holding circuit (40), connected to the output of the gate circuit, and with at least one output line (41) for a generated desired value;
— the reference function generator (20) repeatedly produces a reference function at a frequency determined by the control signals;
— the electrical level and the change rate of the reference function are determined by one of two electrical resistors ($R_1$, $R_2$) in each case;
— these two resistors ($R_1$, $R_2$) are arranged in a module in the device which is easily exchangeable.

2. Desired value transmitter according to claim 1, characterized in that the reference function generator (20) produces an exponential function, whose time constant is dependent on one of the said resistors ($R_2$).

3. Desired value transmitter according to claim 2, characterized in that the means for producing an electrical level comprise an electrical source (10) in the form of a variable voltage source.

4. Desired value transmitter according to claim 2, characterized in that the hold circuit (40) at the output has a variable voltage divider.

5. Desired value transmitter according to claim 4, characterized in that the means for producing an electrical level comprise an electrical source (10), which has the form of a constant current source.

6. Desired value transmitter according to claim 4, characterized in that the means for producing an electrical level comprise an electrical source (10), which has the form of a constant voltage source.

## Revendications

1. Générateur de valeurs de référence d'un système de régulation analogique pour la vitesse de rotation d'un viscosimètre à rotation, avec un générateur de fonction de référence (20), avec un conducteur de sortie ainsi qu'une alimentation (11) pour un niveau électrique, grâce auquel une valeur initiale d'une fonction de référence obtenue est susceptible d'être prédéfinie, et avec une autre alimentation (51) pour des signaux de commande, avec des moyens (10) pour obtenir le niveau électrique, et avec des moyens (50) pour obtenir les signaux de commande, générateur caractérisé par la combinaison des caractéristiques suivantes:

— un circuit de porte (30) avec une alimentation (21) pour le signal électrique en provenance du générateur de fonction de référence (20) par l'intermédiaire du conducteur de sortie de celui-ci, et avec au moins une autre alimentation (52) pour des signaux de commande en provenance des moyens (50) prévus pour engendrer ces signaux de commande, et avec un circuit de maintien (40) raccordé à la sortie du circuit de porte et comportant au moins un conducteur de sortie (41) pour une valeur de référence engendrée,
— le générateur de fonction de référence (20) engendre de façon répétée une fonction de référence selon une cadence déterminée par les signaux de commande,
— le niveau électrique ainsi que le taux de modification de la fonction de référence sont déterminés par respectivement l'une de deux résistances électriques ($R_1$, $R_2$),
— ces deux résistances ($R_1$, $R_2$) sont disposées dans un module facilement interchangeables sur l'appareil.

2. Générateur de valeurs de référence selon la revendication 1, caractérisé en ce que le générateur de fonction de référence (20) engendre une fonction exponentielle, dont la constante de temps dépend de l'une ($R_2$) des résistances précitées.

3. Générateur de valeurs de référence selon la revendication 2, caractérisé en ce que les moyens pour produire un niveau électrique comportent une source électrique (10) qui est une source de tension variable.

4. Générateur de valeurs de référence selon la revendication 2, caractérisé en ce que le circuit de maintien (40) comporte à sa sortie un diviseur de tension ajustable.

5. Générateur de valeurs de référence selon la revendication 3, caractérisé en ce que les moyens pour engendrer un niveau électrique comportent une source électrique (10) qui est une source à courant constant.

6. Générateur de valeurs de référence selon la revendication 3, caractérisé en ce que les moyens pour engendrer un niveau électrique comportent une source électrique (10) qui est une source à tension constante.

FIG. 1a

FIG. 1b

FIG. 1c

FIG. 2b

DREHZAHLSTUFE

DREHZAHL U/MIN.

FIG. 2a

## Berechnung der Drehzahlen-Tabellen

$$n_k = N \cdot 10^{\frac{10\ k\Omega}{R_{2,y}}(k-15)}$$

$k$ = Drehzahlstufe

$n_k$ = Drehzahl in Stufe k

$N$ = Drehzahl in Stufe 15

$F = \dfrac{N}{n_1}$ = Drehzahlfaktor

$n_1$ = Drehzahl in Stufe 1

$a = \dfrac{75}{7}\ k\Omega = 10,71\ k\Omega$

$$N = 780 \cdot \frac{a}{a + R_{1,x}}$$

| x | $R_{1,x}$ |
|---|---|
| 7 | 0 |
| 6 | 10,0 kΩ |
| 5 | 28,0 kΩ |
| 4 | 64,2 kΩ |
| 3 | 120,0 kΩ |
| 2 | 226,0 kΩ |
| 1 | 448,0 kΩ |

| y | $R_{2,y}$ |
|---|---|
| 7 | 64,2 kΩ |
| 6 | 75,0 kΩ |
| 5 | 89,8 kΩ |
| 4 | 113,0 kΩ |
| 3 | 150,0 kΩ |
| 2 | 226,0 kΩ |
| 1 | 448,0 kΩ |

Zahlenbeispiel für den Adapter $\boxed{\begin{smallmatrix}6\\3\end{smallmatrix}}$

| 6 | 10,0 kΩ |

$\boxed{\begin{smallmatrix}6\\3\end{smallmatrix}}$

| 3 | 150 kΩ |

# FIG. 3

FIG. 4a

$$U_{Ref} = U_{R_1} \exp(-nT/R_2C)[V]$$

FIG. 4b

0 019 685